(19) Europäisches Patentamt
European Patent Office
Office européen des brevets

(11) **EP 1 789 711 B1**

(12) **EUROPÄISCHE PATENTSCHRIFT**

(45) Veröffentlichungstag und Bekanntmachung des Hinweises auf die Patenterteilung:
**05.03.2008 Patentblatt 2008/10**

(21) Anmeldenummer: **05790715.6**

(22) Anmeldetag: **13.09.2005**

(51) Int Cl.:
*F16K 31/363* (2006.01)

(86) Internationale Anmeldenummer:
**PCT/EP2005/009828**

(87) Internationale Veröffentlichungsnummer:
**WO 2006/029814 (23.03.2006 Gazette 2006/12)**

(54) **ABBLASEVENTIL FÜR EINEN TURBOLADER**

BLOW-OFF VALVE FOR A TURBOCHARGER

SOUPAPE D'EVACUATION POUR UN TURBOCOMPRESSEUR

(84) Benannte Vertragsstaaten:
**FR GB**

(30) Priorität: **14.09.2004 DE 102004044439**

(43) Veröffentlichungstag der Anmeldung:
**30.05.2007 Patentblatt 2007/22**

(73) Patentinhaber: **A. Kayser Automotive Systems GmbH**
**37574 Einbeck (DE)**

(72) Erfinder: **BIELASS, Ekkehard**
**01257 Dresden (DE)**

(74) Vertreter: **Müller-Boré & Partner**
**Patentanwälte**
**Grafinger Strasse 2**
**81671 München (DE)**

(56) Entgegenhaltungen:
DE-A1- 3 126 707     DE-A1- 10 248 125
DE-A1- 19 754 257    NL-A- 6 402 504

**Beschreibung**

Die vorliegende Erfindung bezieht sich auf ein Abblaseventil, insbesondere auf ein Abblaseventil zum Ablassen eines Ladedrucks eines Turboladers.

Bei herkömmlichen Ventilen, wie es beispielsweise in der Offenlegungsschrift DE 197 54 257 A1 gezeigt ist, wirkt ein Fluiddruck auf einen Ventilkörper in Öffnungsrichtung des Ventils. Bei einem derartigen Ventil muß eine Feder angeordnet sein, die eine hohe Federkraft aufweist, so daß ein sicheres Schließen des Ventils gegen den anstehenden Fluiddruck gewährleistet ist. Das Anordnen einer derartig starken Feder hat jedoch den Nachteil, daß die Federkraft ein Öffnen des Ventils erschwert. Demgemäß muß ein starker Aktuator angeordnet werden.

Um diesen Nachteil zu überwinden, schlägt die Offenlegungsschrift DE 102 48 125 A1 ein sogenanntes balanciertes Ventil vor, bei dem Fluiddurchtritte in einem Ventilkörper angeordnet sind, um auch die Rückseite des Ventilkörpers mit dem anstehenden Fluiddruck zu beaufschlagen. Die Abdichtung der Rückseite des Ventilkörpers erfolgt über eine Membran. Da auf jeder Seite des Ventilkörpers somit dieselbe Druckkraft ansteht, kann eine schwächere Feder und ein schwächerer Aktuator eingebaut werden.

Insbesondere bei der Anordnung eines derartigen Abblaseventils in dem Ladedruckkreislauf eines Turboladers zum Ablassen des Ladedrucks ist es wichtig, daß das Abblaseventil in sehr kurzer Zeit öffnet.

NL 6 402 504 A beschreibt ein mit Wasserdruck hydraulisch betätigtes Ventil mit einem Sauger, der abdichtend gleitbar in einem zylindrischen Raum angeordnet ist und ein Abschließorgan betätigt. Das Abschließorgan ist mit einer zentralen Öffnung versehen, um den zylindrischen Raum mit Druck zu beaufschlagen.

Deshalb besteht die Aufgabe der vorliegenden Erfindung in der Schaffung eines verbesserten Abblaseventils, das sehr schnell öffnen kann und dessen Aktuator nicht übermäßig groß gestaltet sein soll. Des weiteren soll das Ventil so wärmebeständig gestaltet sein, daß es in das Gehäuse eines Turboladers eingebaut werden kann, ohne beschädigt zu werden. Außerdem soll die Baugröße möglichst klein gestaltet werden.

Des weiteren besteht die Aufgabe der vorliegenden Erfindung in der Schaffung eines Turboladers mit einem derartigen Ventil und einer Brennkraftmaschine mit einem Turbolader und einem derartigen Ventil.

Diese Aufgabe wird erfindungsgemäß durch ein Abblaseventil mit den Merkmalen nach Anspruch 1, einen Turbolader nach Anspruch 12 und eine Brennkraftmaschine nach Anspruch 13 gelöst. Vorteilhafte Weiterbildungen der Erfindung sind in den Unteransprüchen definiert.

Das erfindungsgemäße Abblaseventil weist folgendes auf:

einen im wesentlichen zylindrischen Ventilkörper mit einer an einer Stirnseite des Ventilkörpers angeordneten Dichtung;

einen Aktuator zum Bewegen des Ventilkörpers zum Öffnen und Schließen einer Durchlaßöffnung des Ventils;

einen im dem Ventilkörper ausgebildeten Fluiddurchtritt zum Verbinden einer Rückseite des Ventilkörpers mit einem auf der Stirnseite des Ventilkörpers angeordneten ersten Ventilanschluss; und

ein Dichtelement zum Abdichten der Rückseite des Ventilkörpers gegenüber einem an einer Zylindermantelfläche des Ventilkörpers angeordneten zweiten Ventilanschluss,

wobei ein wirksamer Durchmesser des Dichtelements größer ist als ein wirksamer Durchmesser der Dichtung des Ventilkörpers, wobei das Dichtelement bei geschlossenem Ventil an einer axialen Fläche eines Gehäuseelements dichtet und bei geöffnetem Ventil einen Durchlass freigibt, der durch einen Spalt zwischen einem Umfangsrand des Dichtelements und einer Außenwand des Gehäuseelements ausgebildet ist.

Indem ein wirksamer dichtender Durchmesser des Dichtelements größer gestaltet ist als ein wirksamer dichtender Durchmesser der Dichtung des Ventilkörpers, wirkt eine Druckkraft des mit Druck beaufschlagten Fluids in Ventilschließrichtung, da die wirksame Kreisfläche der Stirnseite des Ventilkörpers eine geringere Fläche aufweist als die wirksame Kreisfläche der Rückseite des Ventilkörpers. Hierdurch könnte auf die Anordnung einer Feder zum Andrücken des Dichtelements verzichtet werden.

Indem das Dichtelement nur bei geschlossenem Ventil an einer axialen Fläche eines Gehäuseelements anliegt und dichtet, wirkt die in Schließrichtung gerichtete Fluidkraft nur bei geschlossenem Ventil. Dabei ist der freie, nach außen weisende Randbereich des Dichtelements nicht bis zu dem Umfangsrand des durch das senkrecht zur achsialen Fläche ausgebildete Gehäuseteil geführt, so dass sich dazwischen ein kreisringförmiger Spalt ausbildet. Sobald der Ventilkörper sich in Öffnungsrichtung bewegt, nimmt er das Dichtelement mit und die dichtende Anlage des Dichtelements an der axialen Fläche des Gehäuseelements wird gelöst, wodurch das Dichtelement einen Durchlaß - bedingt durch den kreisringförmigen Spalt - von der Rückseite des Ventilkörpers zu dem zweiten Ventilanschluß freigibt. Somit wirkt nunmehr keine Fluiddruckkraft mehr auf die Rückseite des Ventilkörpers. Somit entsteht ein Druckausgleich und folglich ein Kräftegleichgewicht am Ventilsystem.

Vorzugsweise ist das Dichtelement kreisringförmig und elastisch.

Indem das Dichtelement kreisringförmig und elastisch ist, wird ein Längen- bzw. Toleranzausgleich zwischen der an der Stirnseite des Ventilkörpers angeordneten Dichtung und dem Dichtelement geschaffen. Hierdurch können Fertigungs- und Einbautoleranzen des Ventilkörpers sowie der Dichtelemente und der Dichtsitze ausgeglichen werden.

Vorzugsweise kann das Dichtelement federbelastet sein.

Indem das Dichtelement des weiteren direkt von einer Feder in Dichtrichtung beaufschlagt wird, kann auch eine starres Dichtelement eingesetzt werden und trotzdem ein Längenausgleich geschaffen werden. Des weiteren kann bei dem Einsatz eines elastischen Dichtelements ein noch größerer Längenausgleich geschaffen werden.

Vorzugsweise weist das Ventil des weiteren einen Flansch mit einer Dichtung auf, um in ein Gehäuse eingesetzt zu werden.

Indem das Ventil in ein Gehäuse beispielsweise eines Turboladers eingesetzt werden kann, kann die gesamte Baugröße der Einheit aus Turbolader mit eingesetztem Ventil verkleinert werden, wenn ein Ventileinlaß und -auslaß sowie ein Ventilsitz in dem Gehäuse des Turboladers angeordnet ist.

Vorzugsweise ist das Gehäuseelement mit der axialen Fläche für die Anlage des Dichtelements als ein abnehmbarer Topf gestaltet.

Indem das Gehäuseelement als ein abnehmbarer Topf gestaltet ist, können unterschiedliche Körbe d.h. Körbe mit unterschiedlichen wirksamen dichtenden Durchmessern sowie unterschiedliche Ventilelemente in das baugleiche Ventil eingebaut werden, um Druckverhältnisse und Durchsätze des Ventils an den jeweiligen Motortyp anzupassen. Hierdurch kann eine Vielzahl der Bauelemente des Ventils bei einer Baureihe gleichartig gestaltet werden, wodurch Produktionskosten gespart werden können.

Vorzugsweise weist ein Aktuatorelement zum Bewegen des Ventilkörpers an einem distalen Ende eine Verdickung auf zum in Eingriff treten mit einer Vielzahl an Rastnasen des Ventilkörpers, wobei der Fluiddurchtritt des Ventilkörpers zwischen den Rastnasen angeordnet ist.

Indem der Ventilkörper mit einer Vielzahl an Rastnasen ausgebildet ist, die mit einer distalen Verdickung eines Aktuatorelements in Eingriff treten, kann eine einfache Befestigung des Ventilelements an dem Aktuatorelement vorgesehen werden. Diese Befestigung ermöglicht außerdem den Ausgleich einer Winkelabweichung zwischen einer Mittelachse des Aktuators und einer Mittelachse des Ventilsitzes in dem Turboladergehäuse. Der Fluiddurchtritt durch den Ventilkörper ergibt sich dadurch durch die Zwischenräume zwischen der Vielzahl der Rastnasen, ohne daß eine separate Bohrung für den Fluiddurchtritt angeordnet werden muß.

Vorzugsweise ist das Aktuatorelement mit einem vorgegebenen Spiel mit dem Ventilkörper verbunden.

Durch die Anordnung eines Spiels zwischen dem Ventilkörper und dem Aktuatorelement kann selbst eine sehr große Winkelabweichung zwischen der Mittelachse des Aktuators und der Mittelachse des Ventilsitzes in dem Turboladergehäuse ausgeglichen werden. Beim Einsatz einer Feder bestimmt diese das Anlegen des Ventilkörpers an dem Ventilsitz.

Vorzugsweise ist das Ventil ein Magnetventil mit einer zylindrischen Spule und einem innerhalb dieser Spule angeordneten Magnetanker.

Indem der Aktuator als ein Magnetanker eines Magnetventils ausgestaltet wird, wird ein einfacher Aktuator mit geringer Baugröße geschaffen. Des weiteren kann der Korb gleichzeitig mit dem Vergießen der Spule des Magnetventils in dem Gehäuse des Aktuators abgedichtet und befestigt werden.

Vorzugsweise weist der Magnetanker an der dem Ventilkörper gegenüberliegenden Seite einen Führungsstift sowie einen Abstandhalter auf.

Indem der Magnetanker an seiner dem Ventilsitz abgewandten Seite zusätzlich einen Führungsstift aufweist, kann eine präzise Führung des Magnetankers geschaffen werden. Der an der Oberseite des Ankers angeordnete Abstandhalter, beispielsweise aus nicht magnetischem Edelstahl, schafft eine Unterbrechung des Magnetkreises bei geöffnetem Ventil, um ein zu starkes Anhaften bzw. Ankleben des Magnetankers an der oberen Anschlagfläche zu verhindern.

Vorzugsweise weist das Ventil des weiteren eine Feder auf, um den Ventilkörper in Schließrichtung zu drücken.

Indem zusätzlich eine Feder in dem Ventil angeordnet wird, wird auch im drucklosen Zustand ein sicheres Schließen des Ventils gewährleistet.

Des weiteren wird die Aufgabe der Erfindung gelöst durch einen Turbolader mit einem derartigen Abblaseventil zum Ablassen eines Ladedrucks.

Außerdem wird erfindungsgemäß eine Brennkraftmaschine mit einem Turbolader und einem derartigen Abblaseventil geschaffen, bei der ansprechend auf ein Drosselklappenschließsignal das Ventil geöffnet wird, um den Ladedruck in den Ansaugtrakt vor dem Turbolader abzulassen.

Indem das Ventil beim Erhalten eines Drosselklappenschließsignals sehr schnell öffnet und demgemäß den Ladedruck sehr schnell abläßt, wird ein vorteilhaftes Ansprechverhalten der Brennkraftmaschine erzielt.

Die Erfindung wird nun anhand bevorzugter Ausführungsbeispiele unter Bezugnahme auf die beigefügten Zeichnungen näher erläutert.

Fig. 1 zeigt das erfindungsgemäße Ventil im Längsschnitt.

Fig. 2 zeigt das Ventil von Fig. 1 in einem Turboladergehäuse im eingebauten Zustand.

Fig. 3 zeigt eine Draufsicht auf die Stirnseite des Ventilkörpers.

Fig. 4 zeigt ein Kraft-Weg-Diagramm des erfindungsgemäßen Ventils sowie eines herkömmlichen Ventils.

Fig. 5 zeigt ein Kraft-Weg-Diagramm. bezüglich des Aktuators des erfindungsgemäßen Ventils.

Fig. 6 zeigt ein alternatives Ausführungsbeispiel mit einem Gummiformteil als Abdichtelement.

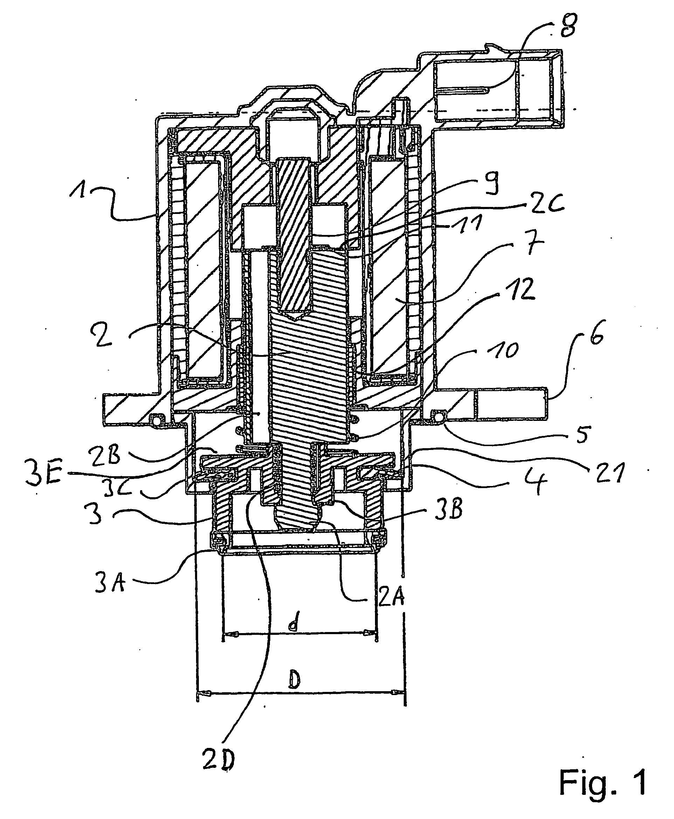

Das erfindungsgemäße Ventil hat, wie in Fig. 1 gezeigt ist, ein im wesentlichen zylindrisches Gehäuse mit einer zylindrischen Spule 7, die über einen elektrischen Anschluß 8 mit Strom versorgt wird. Innerhalb der zylindrischen Spule 7 ist ein Magnetanker 2 angeordnet, der ansprechend auf eine Stromzufuhr zu der elektrischen Spule 7 in der Fig. 1 nach oben gezogen wird, um einen an seinem unteren Ende befestigten Ventilkörper 3 mit nach oben zu ziehen.

Der Magnetanker 2 ist innerhalb des Gehäuses mittels einer teflonbeschichteten Lagerschale 12 vorzugsweise aus magnetischem Material, beispielsweise Eisen, geführt. Vorzugsweise hat der Magnetanker 2 an seiner Oberseite einen Stift 9 aus nicht magnetischem Edelstahl eingepaßt, der in einer weiteren oben liegenden Führung (ebenfalls teflonbeschichtetes Material) geführt ist. Außerdem ist ein Abstandhalter 11 an einer oberen axialen Endseite 2C des Magnetankers 2 angeordnet, um einen Abstand zwischen dem Magnetanker 2 und seiner oberen Anschlagfläche bei geöffnetem Ventil, d.h. bei nach oben angezogenem Magentanker 2 zu gewährleisten. Dieser Abstandhalter 11 ist vorzugsweise aus nicht magnetischem Material, beispielsweise Messing oder Edelstahl, hergestellt und zusammen mit dem Stift 9 in eine obere axiale Öffnung des Magnetankers 2 eingepaßt. Durch diesen Abstandhalter 11 wird ein Luftspalt zwischen dem Magnetanker 2 und einer oberen Anschlagfläche des Magnetankers 2 gewährleistet, um den Magnetkreis an dieser Stelle zu unterbrechen, wenn der Magnetanker 2 nach oben angezogen wird. Hierdurch wird eine zu starkes Anhaften bzw. Ankleben des Magnetankers 2 in seiner oberen angezogenen Stellung verhindert, so daß ein sicheres Schließen des Ventils bei der Unterbrechung der Stromzufuhr zu der Spule 7 gewährleistet ist.

Ein Schließen des Ventils wird durch eine Feder 10 erzielt, wenn eine Stromzufuhr zu der Spule 7 unterbrochen wird.

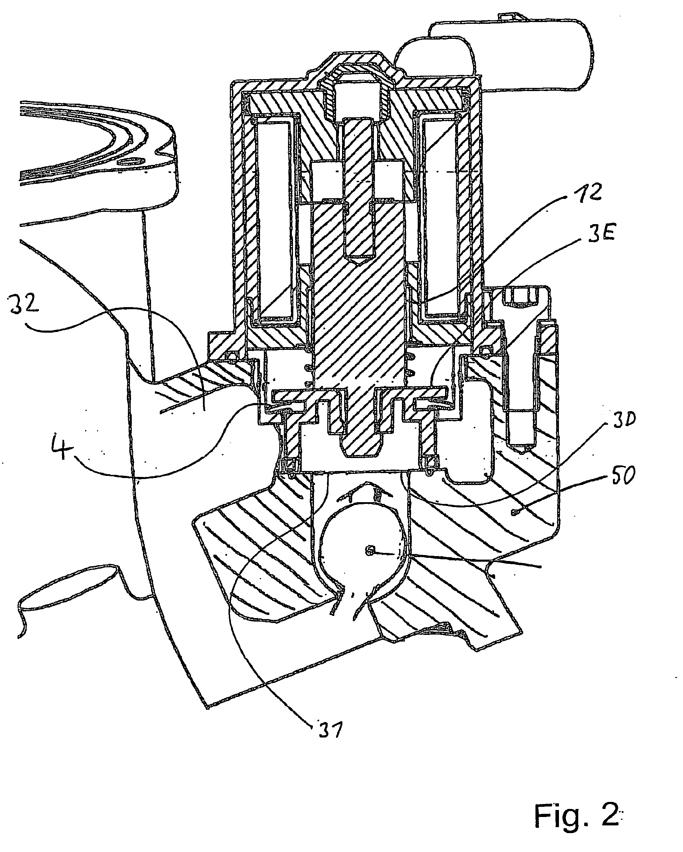

Der Magnetanker 2 weist an seinem unteren distalen Ende einen stiftförmigen Abschnitt 2D mit geringerem Durchmesser auf. Am distalen Ende dieses Abschnitts 2D mit geringerem Durchmesser ist eine Verdickung 2A vorgesehen. Ein Ventilkörper 3 kann an diesem distalen Ende des Magnetkörpers 2 angebracht werden, indem der Ventilkörper 3 eine Vielzahl an elastischen Rastnasen 3B aufweist, die beim Aufschieben des Ventilkörpers 3 auf den Abschnitt 2D mit geringem Durchmesser des Magnetankers 2 in den Abschnitt 2D mit geringerem Durchmesser einschnappen. Der Ventilkörper 3 ist dann durch den Eingriff der Rastnasen 3B an der Verdickung 2A an dem Magnetanker 2 befestigt. Der Ventilkörper 3 ist vorzugsweise aus Kunststoff gefertigt. Hierzu eignet sich insbesondere Polyamid 6.6 mit einem Glasfaseranteil von 10 bis 50%, vorzugsweise 30%, um eine ausreichende Festigkeit des Ventilkörpers 3 zu erzielen. Der Ventilkörper 3 kann jedoch auch aus einem anderen geeigneten Kunststoff gefertigt sein. An einer in Fig. 2 gezeigten Stirnseite 3D des Ventilkörpers ist eine Dichtung 3A angeordnet, die aus einem Elastomer hergestellt und an den Ventilkörper 3 angegossen ist. Diese Dichtung 3A tritt in Eingriff mit einem Dichtsitz, der in einem Turboladergehäuse 50 angeordnet ist. Das gesamte Ventil wird über einen Flansch 6 in das Turboladergehäuse 50 eingesetzt und vorzugsweise mit Schrauben daran gesichert. Zur Abdichtung ist eine Dichtung, vorzugsweise ein O-Ring 5, an einer Stirnseite des Flansches 6 angeordnet.

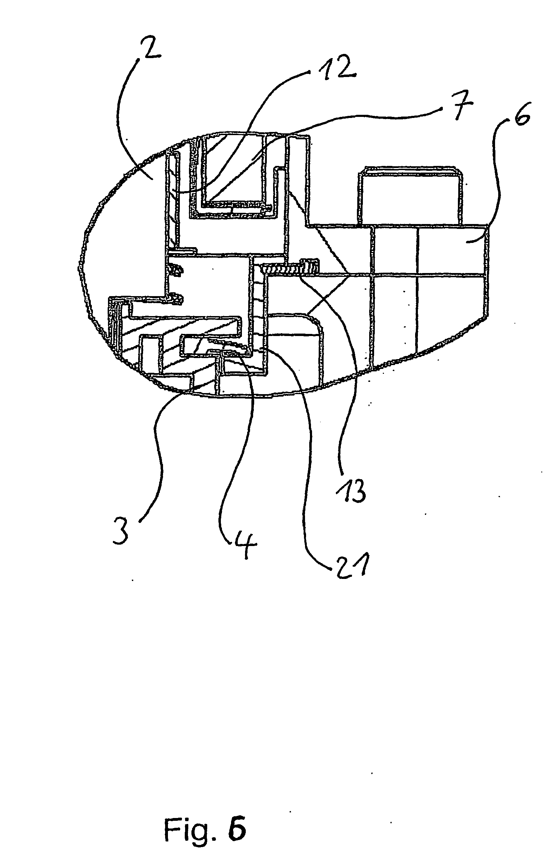

Alternativ kann jedoch ein Gummiformteil 13 eingesetzt werden, wie in Fig. 6 gezeigt ist. Dieses Gummiformteil 13 bietet den Vorteil, dass es gleichzeitig den Flansch 6 gegenüber dem Turboladergehäuse 50 und das Ventilgehäuse 1 gegenüber einem Gehäuseelement 21 abdichtet.

Der Ventilkörper 3 weist des weiteren eine radiale Nut 3C auf, in die ein Dichtelement 4 dichtend eingepaßt wird. Das Dichtelement 4 ist aus einem Gummi hergestellt und kraftstoffresistent und wärmebeständig zumindest in einem Bereich zwischen -40°C und +160°C. Hierzu ist dieses Dichtelement 4 vorzugsweise aus Viton (FPM) oder Fluorsilikon hergestellt. Insbesondere bei tiefen Temperaturen eignet sich Fluorsilikon, da es eine Kälteflexibilität bis ca. -40°C aufweist. Dieses Dichtelement 4 liegt im geschlossenen Zustand des Ventils an einer axialen Anlagefläche des topfförmigen Gehäuseelements 21 an. Durch die Ausbildung als eine Lippendichtung schafft das Dichtelement 4 einen Längen- bzw. Toleranzausgleich im Bereich bis zu 0,3 mm, so dass gewährleistet ist, dass die Dichtung 3A des Ventilkörpers 3 und gleichzeitig das Dichtelement 4 ihre Dichtfunktion erfüllen, auch wenn Abweichungen der Bauteile des Ventils und eines Turboladergehäuses 50 vorhanden sind.

Dabei gibt es einen kreisringförmigen Spalt zwischen dem Umfangsrand des Dichtelements 4 und einer zylindrischen Außenwand des Gehäuseelements 21. Dieser kreisringförmige Spalt dient bei geöffnetem Ventil als ein Fluiddurchtritt zwischen der Rückseite 3E des Ventilkörpers 3 und dem zweiten Ventilanschluß 32.

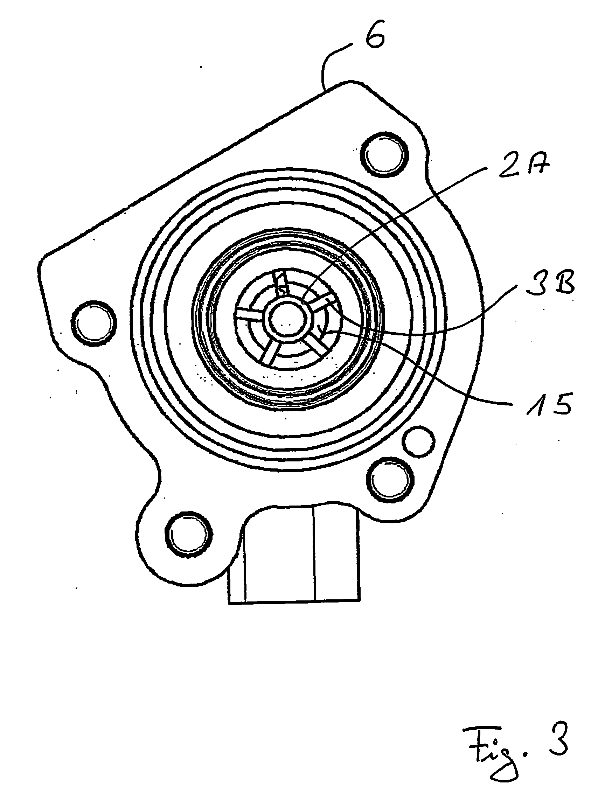

Der an einem ersten Ventilanschluß 31 anstehende Ladedruck P steht an einer Stirnseite 3D des Ventilkörpers 3 an und versucht das Ventil in eine Öffnungsrichtung zu bewegen. Jedoch ist der erste Ventilanschluß 3D mit einer Rückseite des Ventil körpers 3 verbunden, und zwar über Zwischenräume 15 zwischen den Rastnasen 3B, wie in Fig. 3 gezeigt ist, so daß der Fluiddruck P des ersten Ventilanschlusses 3D auch an einer Rückseite 3E des Ventilkörpers 3 ansteht. Der dichtende wirksame Durchmesser D des Dichtelements 4 ist so gestaltet, daß er einen größeren Durchmesser als der Durchmesser d des Dichtelements 3a aufweist. Dadurch wirkt eine größere Fluiddruckkraft auf die Rückseite 3E des Ventilkörpers 3 als die Fluiddruckkraft, die auf die Stirnseite 3D des Ventilkörpers 3 wirkt.

Demgemäß wirkt eine Fluiddruckkraft F1 in Öffnungsrichtung, die mit folgender Formel berechnet wer-

den kann:

$$F1 = d^2 \times \pi/4 \times P$$

Darüber hinaus wirkt eine Fluiddruckkraft F2 in Schließrichtung, die mit folgender Formel berechnet werden kann:

$$F2 = D^2 \times \pi/4 \times P$$

Hierdurch ergibt sich eine resultierende Fluiddruckkraft F in Ventilschließrichtung, die mit folgender Formel berechnet werden kann:

$$F = F2 - F1$$

Auf die Feder 10 könnte demgemäß vollständig verzichtet werden, da das Ventil alleine durch die anstehende Fluiddruckkraft in Schließrichtung gedrückt wird.

Wenn sich der Ventilkörper 3 durch Erregen der Spule 7 und demgemäß Anziehen des Magnetankers 2 in Fig. 1 nach oben bewegt, hebt das Dichtelement 4 von der axialen Anlagefläche des Gehäuseelements 21 ab, und gibt an dem kreisringförmigen Spalt zwischen dem Umfangsrand des Dichtelements 4, und der zylindrischen Außenwand des Gehäuseelements 21 einen Fluiddurchtritt frei. Hierdurch wird der an der Rückseite 3E des Ventilkörpers 3 anstehender Fluiddruck über den zweiten Ventilanschluß 32 abgelassen. Der Fluiddruck wirkt auf alle Flächen gleich, es gibt ein Kräftegleichgewicht.

Das Schließen des Ventils erfolgt über die Federkraft der Feder 10.

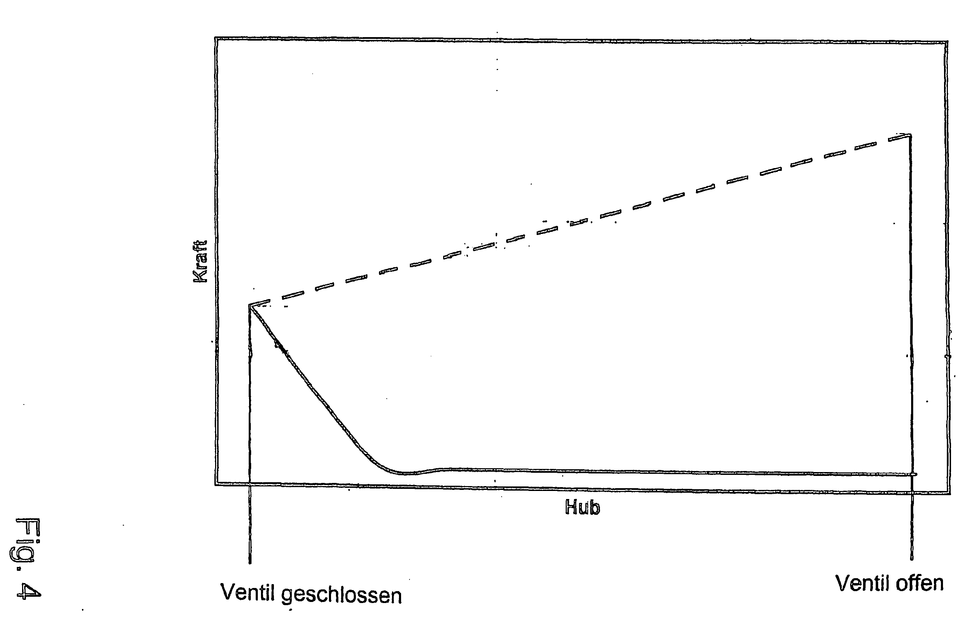

In Fig. 4 ist ein Kraft-Wege-Diagramm dargestellt, in dem eine gestrichelte Linie die Federkraft eines herkömmlichen balancierten Ventils zeigt. Ausgehend von einer Federvorspannkraft bei geschlossenem Ventil (linke Seite in Fig. 4) nimmt die Federkraft beim Öffnen des Ventils linear zu und erschwert somit den Öffnungsvorgang.

Im Gegensatz hierzu zeigt die durchgezogene Linie des Kraft-Wege-Diagramms von Fig. 4 die resultierende Druckkraft F des erfindungsgemäßen Ventils. Wie aus dieser Fig. 4 ersichtlich ist, nimmt die resultierende, in Schließrichtung wirkende Kraft F des erfindungsgemäßen Ventils bereits bei einem sehr geringen Hub stark ab.

Die Durchmesser der Dichtung 3A (d) sowie des Dichtelements 4 (D) können an den jeweiligen Motortyp angepaßt werden, indem unterschiedliche Gehäuseelemente 21 sowie Ventilkörper 3 und Dichtelemente 4 zur Verfügung stehen. Die übrigen Bauteile des Ventils können für eine gesamte Baureihe gleich gestaltet werden. Lediglich die drei genannten Bauteile Gehäuseelement 21, Dichtelement 4 und Ventilkörper 3 müssen für den jeweiligen Motortyp ausgesucht werden. Hierdurch können Produktionskosten eingespart werden.

Der Druckabfall an der Rückseite des Ventilkörpers beim Öffnen des Ventils kann angepaßt werden durch Variieren der Querschnittsfläche der Zwischenräume 15 zwischen den Rastnasen 3B (Durchtritt zwischen erstem Ventilanschluß und Rückseite des Ventilkörpers 3) und Anpassen einer Querschnittsfläche zwischen einem Umfang des Dichtelements 4 und einer Begrenzung durch das Gehäuseelement 21 (Durchtritt zwischen Rückseite des Ventilkörpers 3 und dem zweiten Ventilanschluß 32), um hierdurch den dynamischen Druckabfall zu optimieren.

Das topfförmige Gehäuseelement 21 wird vorzugsweise zusammen mit der Spule 7 in dem Gehäuse 1 des Ventils verbunden oder vergossen. Es kann jedoch auch durch jedes andere bekannte Befestigungsmittel an dem Gehäuse 1 befestigt werden.

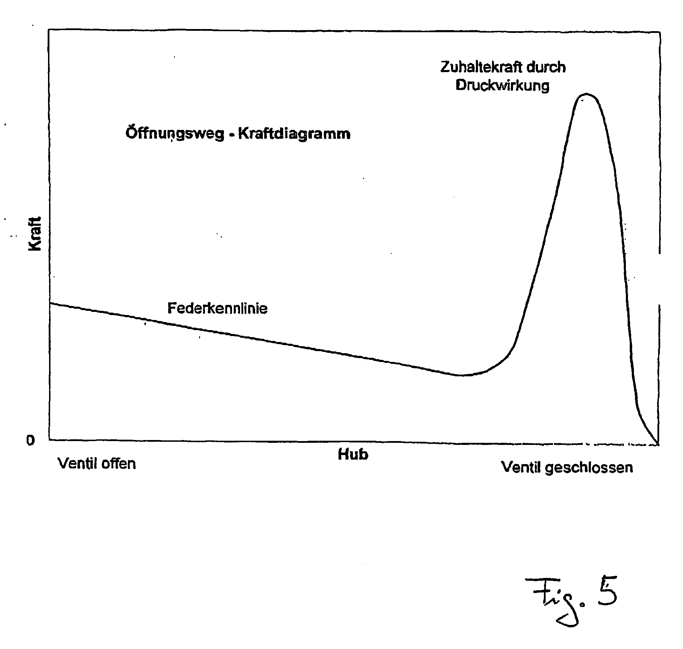

Fig. 5 zeigt ein weiteres Kraft-Weg-Diagramm und zwar bezüglich der für den Aktuator benötigten Kraft beim Öffnen des Ventils im Hinblick auf eine geschlossene Ventilstellung bzw. eine offene Ventilstellung. Ist das Ventil geschlossen, wirkt auf den Aktuator keine Kraft. Soll der Aktuator nun aktiviert werden, um das Ventil zu öffnen, wird anfangs eine relativ große Kraft benötigt, um das Ventil anfangs überhaupt erst einmal zu öffnen. Ist diese anfängliche Öffnung erst einmal erreicht, kann die auf den Aktuator wirkende Kraft stark herabgesetzt werden, wobei dabei dennoch eine größere Öffnungsstellung erreicht wird, da die sich einstellende Strömung den Öffnungsvorgang unterstützt. Zum weiteren Öffnen des Ventils wird dann lediglich eine gleichmäßig ansteigende Kraft des Aktuators benötigt.

Die vorliegende Erfindung ist nicht auf das beschriebene Ausführungsbeispiel beschränkt, sondern kann mit unterschiedlichen Abwandlungen ausgestaltet werden. Insbesondere kann das Dichtungselement 4 auch ein im wesentlichen starres Dichtungselement sein, das durch eine Feder gegen die axiale Anlagefläche gedrückt-wird.

Des weiteren muß der Aktuator nicht aus einer Magnetspule und einem Magnetanker bestehen, sonders es kann auch ein anderer Aktuator eingesetzt werden, um den Ventilkörper 3 zu betätigen. Hierzu eignet sich beispielsweise ein pneumatischer oder hydraulischer Aktuator oder auch ein Stellmotor.

Das Aktuatorelement ist mit einem vorgegebenen Spiel mit dem Ventilkörper verbunden. Dieses Spiel ist in radialer Richtung vorhanden, indem der Abschnitt 2D des Magnetankers 2 einen geringeren Durchmesser als die auf diesen Abschnitt 2D aufgepaßten Rastnasen 3B hat. Außerdem ist ein axiales Spiel vorhanden, indem der Abschnitt 2D mit geringerem Durchmesser des Magnetankers 2 eine größere axiale Länge als die Rastnasen 3B hat.

Anstelle der Befestigung des Ventilkörpers 3 mittels der Rastnasen 3B und der Verdickung 2A kann auch ein Kardangelenk angeordnet werden. Hierdurch können noch größere Winkelversätze zwischen einer Mittellinie des Aktuators und einer Mittellinie des Ventilsitzes in dem Turboladergehäuse 50 ausgeglichen werden.

Anstelle des Einbauens eines Ventils in ein Turboladergehäuse 50 mittels des Flansches 6 und Abdichten der Schnittstelle zwischen dem Gehäuse 1 des Ventils und dem Gehäuse 50 des Turboladers mittels der Dichtung 5, kann auch ein nicht gezeigtes Untergehäuse an dem Ventil vorgesehen sein, in dem ein erster und zweiter Ventilanschluß sowie ein Ventilsitz angeordnet sind. Diese Bauweise ist insbesondere zu bevorzugen, wenn das Ventil separat von einem Turbolader angeordnet werden soll oder in einer anderen Anwendung als in dem Ladeluftkreislauf eines Turboladers Verwendung finden soll.

Bezugszeichenliste

| | |
|---|---|
| 1 | Ventilgehäuse |
| 2 | Magnetanker |
| 2A | Verdickung |
| 2B | Durchlaßkanal |
| 2C | axiale Endseite |
| 2D | Abschnitt mit geringem Durchmesser |
| 3 | Ventilkörper |
| 3A | Dichtung |
| 3B | Rastnase |
| 3C | Nut |
| 3D | Stirnseite |
| 3E | Rückseite |
| 4 | Dichtelement |
| 5 | Dichtung |
| 6 | Flansch |
| 7 | Magnetspule |
| 8 | elektrischer Anschluß |
| 9 | Stift |
| 10 | Feder |
| 11 | Abstandhalter |
| 12 | Lagerschale |
| 13 | Gummiformteil |
| 15 | Zwischenraum |
| 21 | Gehäuseelement |
| 31 | erster Ventilanschluß |
| 32 | zweiter Ventilanschluß |
| 50 | Turboladergehäuse |

**Patentansprüche**

1. Abblaseventil mit:

    einem im wesentlichen zylindrischen Ventilkörper (3) mit einer an einer Stirnseite (3D) des Ventilkörpers angeordneten Dichtung (3A);
    einem Aktuator (2, 7) zum Bewegen des Ventilkörpers (3) zum Öffnen und Schließen einer Durchlaßöffnung des Ventils;
    einem im dem Ventilkörper (3) ausgebildeten Fluiddurchtritt zum Verbinden einer Rückseite (3E) des Ventilkörpers (3) mit einem auf der Stirnseite (3D) des Ventilkörpers (3) angeordneten ersten Ventilanschluss (31); und
    einem Dichtelement (4) zum Abdichten der Rückseite (3E) des Ventilkörpers (3) gegenüber einem an einer Zylindermantelfläche des Ventilkörpers (3) angeordneten zweiten Ventilanschluss (32),

    wobei ein wirksamer Durchmesser (D) des Dichtelements (4) größer ist als ein wirksamer Durchmesser (d) der Dichtung (3A) des Ventilkörpers (3),
    **dadurch gekennzeichnet, dass**
    das Dichtelement (4) bei geschlossenem Ventil an einer axialen Fläche eines Gehäuseelements (21) dichtet und bei geöffnetem Ventil einen Durchlass freigibt, der durch einen Spalt zwischen einem Umfangsrand des Dichtelements (4) und einer Außenwand des Gehäuseelements (21) ausgebildet ist.

2. Abblaseventil nach Anspruch 1, wobei das Dichtelement (4) kreisringförmig und elastisch und als Lippendichtung ausgebildet ist.

3. Abblaseventil nach Anspruch 1, wobei das Dichtelement federbelastet ist.

4. Abblaseventil nach einem der vorherigen Ansprüche, wobei das Ventil des weiteren einen Flansch (6) mit einer Dichtung (5) aufweist, um in ein Gehäuse (50)

5. Abblaseventil nach einem der vorherigen Ansprüche, wobei das Gehäuseelement (21) als ein separates abnehmbares Teil gestaltet ist.

6. Abblaseventil nach einem der vorherigen Ansprüche, wobei ein Aktuatorelement (2) zum Bewegen des Ventilkörpers (3) an einem distalen Ende eine Verdickung (2A) aufweist zum in Eingriff treten mit einer Vielzahl an Rastnasen (3B) des Ventilkörpers (3) und der Fluiddurchtritt des Ventilkörpers zwischen den Rastnasen (3B) angeordnet ist.

7. Abblaseventil nach einem der vorherigen Ansprüche, wobei das Aktuatorelement (2) mit Spiel mit dem Ventilkörper (3) verbunden ist.

8. Abblaseventil nach einem der vorherigen Ansprüche, wobei das Ventil ein Magnetventil mit einer zylindrischen Spule (7) und einem innerhalb dieser Spule angeordneten Magnetanker (2) ist.

9. Abblaseventil nach Anspruch 8, wobei der Magnetanker (2) an der dem Ventilkörper (3) gegenüberliegenden Seite einen Führungsstift (9) sowie einen Abstandhalter (11) aufweist.

10. Abblaseventil nach einem der vorherigen Ansprüche, das eine Feder (10) aufweist, um den Ventilkörper (3) in Schließrichtung zu drücken.

11. Verwendung eines Abblaseventils nach einem der vorherigen Ansprüche zum Ablassen eines Ladedrucks eines Turboladers.

12. Turbolader mit einem Abblaseventil nach einem der vorherigen Ansprüche zum Ablassen eines Ladedrucks.

13. Brennkraftmaschine mit einem Turbolader und einem Abblaseventil nach den Ansprüchen 1 bis 10, bei der ansprechend auf ein Drosselklappenschließsignal das Ventil geöffnet wird, um den Ladedruck in den Ansaugtrakt stromaufwärts des Turboladers abzulassen.

**Claims**

1. Blow-off valve having:

   an essentially cylindrical valve body (3) with a seal (3A) which is arranged on an end side (3D) of the valve body;
   an actuator (2, 7) for moving the valve body (3) in order to open and close a passage opening in the valve;
   a fluid passage, formed in the valve body (3), for connecting a rear side (3E) of the valve body (3) to a first valve port (31) which is arranged on the end side (3D) of the valve body (3); and
   a sealing element (4) for sealing the rear side (3E) of the valve body (3) with respect to a second valve port (32) which is arranged on a cylinder lateral surface of the valve body (3),

   wherein an effective diameter (D) of the sealing element (4) is larger than an effective diameter (d) of the seal (3A) of the valve body (3),
   **characterized in that**
   when the valve is closed the sealing element (4) forms a seal against an axial face of a housing element (21), and when the valve is opened it clears a passage which is formed by a gap between a circumferential edge of the sealing element (4) and an outer wall of the housing element (21).

2. Blow-off valve according to Claim 1, wherein the sealing element (4) is of elastic design in the form of a circular ring and is embodied as a lip seal.

3. Blow-off valve according to Claim 1, wherein the sealing element is spring-loaded.

4. Blow-off valve according to one of the preceding claims, wherein the valve also has a flange (6) with a seal (5) for insertion into a housing (50).

5. Blow-off valve according to one of the preceding claims,: wherein the housing element (21) is configured as a separate, removable part.

6. Blow-off valve according to one of the preceding claims, wherein an actuator element (2) for moving the valve body (3) has, at a distal end, a thickened portion (2A) for entering into engagement with a plurality of latching projections (3B) on the valve body (3), and the fluid passage in the valve body is arranged between the latching projections (3B).

7. Blow-off valve according to one of the preceding claims, wherein the actuator element (2) is connected with play to the valve body (3).

8. Blow-off valve according to one of the preceding claims, wherein the valve is a solenoid valve with a cylindrical coil (7) and a magnet armature (2) which is arranged inside this coil.

9. Blow-off valve according to Claim 8, wherein the magnet armature (2) has a guide pin (9) and a spacer element (11) on the side opposite the valve body (3).

10. Blow-off valve according to one of the preceding claims, which has a spring (10) for pressing the valve body (3) in the closing direction.

11. Use of a blow-off valve according to one of the preceding claims for discharging a charge pressure of a turbocharger.

12. Turbocharger having a blow-off valve according to one of the preceding claims for discharging a charge pressure.

13. Internal combustion engine having a turbocharger and a blow-off valve according to Claims 1 to 10, in which in response to a throttle valve closing signal the valve is opened in order to discharge the charge pressure into the intake section upstream of the turbocharger.

**Revendications**

1. Soupape d'évacuation présentant :

un corps de soupape (3) essentiellement cylindrique avec une garniture (3A) disposée sur un côté frontal (3D) du corps de soupape ;

un actionneur (2, 7) pour déplacer le corps de soupape (3) afin d'ouvrir et de fermer un orifice de passage de la soupape ;

un passage fluidique réalisé dans le corps de soupape (3) pour relier une face arrière (3E) du corps de soupape (3) à un premier raccordement de soupape (31) disposé sur le côté frontal (3D) du corps de soupape (3) ; et

un élément d'étanchéité (4) pour rendre étanche la face arrière (3A) du corps de soupape (3) par rapport à un second raccordement de soupape (32) disposé sur une surface enveloppe cylindrique du corps de soupape (3),

un diamètre utile (D) de l'élément d'étanchéité (4) étant supérieur à un diamètre utile (d) de la garniture (3A) du corps de soupape (3),

**caractérisée en ce que**
l'élément d'étanchéité (4) rend étanche, lorsque la soupape est fermée, une surface axiale d'un élément de boîtier (21) et lorsque la soupape est ouverte, libère un passage qui est réalisé au travers d'une fente entre un bord circulaire de l'élément d'étanchéité (4) et une paroi externe de l'élément de boîtier (21).

2. Soupape d'évacuation selon la revendication 1, l'élément d'étanchéité (4) étant réalisé de manière annulaire et élastique et comme un joint à lèvres.

3. Soupape d'évacuation selon la revendication 1, l'élément d'étanchéité étant sollicité par ressort.

4. Soupape d'évacuation selon l'une quelconque des revendications précédentes, la soupape présentant en outre une bride (6) avec une garniture (5) afin d'être insérée dans un boîtier (50).

5. Soupape d'évacuation selon l'une quelconque des revendications précédentes, l'élément de boîtier (21) étant conçu comme une partie amovible séparée.

6. Soupape d'évacuation selon l'une quelconque des revendications précédentes, un élément actionneur (2) présentant pour le déplacement du corps de soupape (3) sur une extrémité distale un épaississement (2A) pour s'engager avec une multitude de becs d'encliquetage (3B) du corps de soupape (3) et le passage fluidique du corps de soupape étant disposé entre les becs d'encliquetage (3B).

7. Soupape d'évacuation selon l'une quelconque des revendications précédentes, l'élément actionneur (2) étant relié avec jeu au corps de soupape (3).

8. Soupape d'évacuation selon l'une quelconque des revendications précédentes, la soupape étant une électrovanne avec une bobine (7) cylindrique et un induit (2) disposé au sein de cette bobine.

9. Soupape d'évacuation selon la revendication 8, l'induit (2) présentant sur le côté opposé au corps de soupape (3) un tenon de guidage (9) ainsi qu'une pièce d'écartement (11).

10. Soupape d'évacuation selon l'une quelconque des revendications précédentes, laquelle présente un ressort (10) afin de presser le corps de soupape (3) dans le sens de fermeture.

11. Utilisation d'une soupape d'évacuation selon l'une quelconque des revendications précédentes pour l'évacuation d'une pression de suralimentation d'un turbocompresseur.

12. Turbocompresseur doté d'une soupape d'évacuation selon l'une quelconque des revendications précédentes pour l'évacuation d'une pression de suralimentation.

13. Moteur à combustion interne dotée d'un turbocompresseur et d'une soupape d'évacuation selon les revendications 1 à 10, dans lequel la soupape est ouverte en réponse à un signal de fermeture du papillon des gaz afin d'évacuer la pression de suralimentation dans la course d'aspiration en aval du turbocompresseur.

Fig. 1

Fig. 2

Fig. 3

Fig. 4

Öffnungsweg - Kraftdiagramm

Zuhaltekraft durch
Druckwirkung

Kraft

Federkennlinie

0

Ventil offen

Hub

Ventil geschlossen

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19754257 A1
- DE 10248125 A1
- NL 6402504 A